# EUROPÄISCHE PATENTSCHRIFT

(11) **EP 0 630 791 B1**
(45) Veröffentlichungstag und Bekanntmachung des Hinweises auf die Patenterteilung: **27.11.1996**
(21) Anmeldenummer: 94107327.2
(22) Anmeldetag: 11.05.1994
(51) Int. Cl.: B61D 3/04, B61D 3/16, B61F 5/30, B60G 7/00, B60G 11/10, B60G 17/02

(54) **Eisenbahngüterwagen**
Railway goods wagon
Wagon à marchandises

(30) Priorität: 18.05.1993 DE 4316535
(43) Veröffentlichungstag der Anmeldung: 28.12.1994
(73) Patentinhaber: ABB HENSCHEL WAGGON UNION GmbH, D-13509 Berlin (DE)
(72) Erfinder: Ahlborn, Günter, D-57076 Siegen (DE); Büdenbender, Herbert, D-57250 Netphen (DE)
(74) Vertreter: Rupprecht, Klaus, Dipl.-Ing.

(56) Entgegenhaltungen:
- DE-A- 1 814 759
- DE-A- 2 402 090
- DE-A- 4 023 367
- DE-C- 498 517
- FR-A- 1 054 232

## Beschreibung

Die Erfindung betrifft einen Eisenbahngüterwagen, bestehend aus einer Ladeplattform und zwei Radsätzen, zwei Doppelachslaufwerken oder zwei Drehgestellen, wobei die Abfederung der Ladeplattform gegenüber den Radsätzen oder den Doppelachslaufwerken oder der Ladeplattform mit den Drehgestellrahmen gegenüber den Radsätzen der Drehgestelle über an Federböcken mit Schaken aufgehängten Blatttragfedern erfolgt und wobei die Führung der Radsätze oder der Doppelachslaufwerke unter der Ladeplattform oder die Führung der Radsätze in den Drehgestellrahmen eine vertikale Verschiebung und begrenzt horizontale Ausdrehung der Radsätze gegenüber der Ladeplattform bzw. dem Drehgestellrahmen oder des Doppelachslaufwerks gegenüber der Ladeplattform ermöglicht.

Bekannt sind Eisenbahngüterwagen mit einer Ladeplattform, sogenannte Flachwagen, deren Laufwerke aus Einzelachsen, Doppelachslaufwerken oder Drehgestellen bestehen. Diese Flachwagen mit Ladeplattform werden üblicherweise mittels Kran oder Gabelstapler Be- und Entladen. Zur wirtschaftlichen Be- und Entladung von bestimmten Ladegütern, beispielsweise auf Stütztbeinen stehenden Wechselbehältern, ist es jedoch erforderlich, eine Einrichtung zu finden, die dem Eisenbahngüterwagen gestattet, ohne Beladegeräte selbsttätig die Wechselbehälter aufzunehmen bzw. abzusetzen. Die Möglichkeit einer Veränderung der Plattformhöhe, die beispielsweise durch die Luftfederung von Reisezugwagen-Drehgestellen gegeben ist, besteht bei Eisenbahngüterwagen nicht, da diese aus wirtschaftlichen Gründen nicht mit Drehgestellen mit Luftfederung ausgerüstet sind.

Es ist nun bereits aus der Praxis bekannt, bei Schwerlastfahrzeugen, die insbesondere zum Transport von Großtransformatoren dienen, die aus Durchlade- bzw. Schnabelträgern bestehende Ladungshalterung mittels Hydraulikeinrichtungen abzusenken und anzuheben und somit die Last aufzunehmen und abzusetzen. Diese Einrichtungen sind jedoch sehr aufwendig und lassen sich lediglich bei den mit Durchladeträgern oder Schnabelträgern ausgerüsteten aufwendigen Schwerlasttransportfahrzeugen anwenden. Es ist weiter bekannt, in die Ladeplattform eines Eisenbahngüterwagens ein Lift-System zu integrieren, über das der Eisenbahngüterwagen Wechselbehälter aufnehmen kann. Hierzu transportiert ein LKW den Wechselbehälter auf den Schienenstrang, senkt bei ausgefahrenen Stützbeinen des Wechselbehälters diesen über dem Gleis ab und fährt wieder aus der Gleisspur heraus. Anschließend rollt ein Eisenbahnwaggon unter den Wechselbehälter bis zu einer definierten Übernahme. Jetzt wird die Lift-Konstruktion des Eisenbahnwagens angehoben, so daß die Stützbeine ihren Bodenkontakt verlieren und mechanisch eingezogen werden können. Der so beladene Zugverband kann anschließend das Gleis verlassen. Dieses System ist jedoch sehr aufwendig und teuer und für einen wirtschaftlichen Verkehr nicht geeignet.

Durch die DE-OS 40 23 367 ist weiter ein Eisenbahngüterwagen bekannt, der im wesentlichen aus einer Ladefplattform und zwei Einzelachsen oder zwei Doppelachslaufwerken mit fest eingespannten Achsen besteht, wobei die Ladeplattform über die Blatttragfedern auf der Einzelachse bzw. den Doppelachslaufwerken gelagert ist und wobei die Führung der Einzelachsen oder des Doppelachslaufwerks unter der Ladeplattform lediglich aus vertikalen Führungselementen bzw. Achslagerstegen an der Ladeplattform und den Achslagern der Einzelachse bzw. dem Rahmen des Doppelachslaufwerks besteht, die eine vertikale Verschiebung und eine begrenzt horizontale Ausdrehung und Querverschiebung der Einzelachse bzw. des Doppelachslaufwerks gegenüber der Ladeplattform ermöglichen.

Hierbei sind zwischen den Achslagergehäusen der Einzelachse bzw. dem Rahmen des Doppelachslaufwerks und den Blatttragfedern Hubelemente angeordnet, über die die Ladeplattform mit den Blatttragfedern gegenüber der Einzelachse bzw. dem Doppelachslaufwerk anhebbar ist. Durch diese Konstruktion wird ermöglicht, Eisenbahngüterwagen, deren Laufwerk aus Einzelachsen bzw. Doppelachslaufwerken besteht, wirtschaftlich so zu gestalten, daß die Aufnahme von insbesondere Wechselbehälter ohne fremde Beladegeräte ermöglicht wird. Es ist auch nicht erforderlich, zum Be- und Entladen Verspannungen oder Führungen zwischen der Ladeplattform und dem Laufwerk zu lösen.

Nachteilig bei dieser vorgenannten Ausführung ist die Notwendigkeit, gesonderte Achslagergehäuse für die Achslager und gesonderte Federbunde für die Blatttragfedern zu schaffen. Ein weiterer Nachteil besteht darin, daß der zur Verfügung stehende Einbauraum für die Hubelemente sehr klein ist und aus diesem Grund mit hohem Energieaufwand das Anheben der Ladeplattform bewerkstelligt werden muß. Ein weiterer Nachteil dieser Ausführung besteht darin, daß die vorgenannte Einrichtung nicht bei Eisenbahngüterwagen, deren Laufwerke aus Drehgestellen bestehen, angewendet werden kann, da zwischen Ladebrücke und Drehgestellrahmen über Drehzapfen oder Drehpfannen eine feste, während des Betriebseinsatzes nicht lösbare Verbindung vorgesehen ist.

Die Aufgabe vorliegender Erfindung bestand darin, einen Eisenbahngüterwagen der eingangs genannten Art so auszubilden, daß mit einfachen, wirtschaftlichen Mitteln eine Möglichkeit geschaffen wird, den Eisenbahngüterwagen unter Ladegüter insbesondere Wechselbehälter, zu fahren, die Ladeplattform anzuheben und nach dem Aufnehmen des Ladegutes die Ladeplattform wieder in Fahrstellung abzusenken, um das Be- und Entladen des Eisenbahngüterwagens unabhängig von wagenfremden Beladegeräten zu ermöglichen, wobei der Eisenbahngüterwagen mit allen normalgebräuchlichen Laufwerken, beispielsweise Einzelachsen, Doppelachslaufwerken oder Drehgestellen, ausgerüstet sein kann.

Diese Aufgabe wird gemäß der Erfindung dadurch gelöst, daß bei einem Eisenbahngüterwagen der eingangs genannten Art zwischen jeder Federschake und dem dazugehörigen Federbock der Ladeplattform oder des Drehgestellrahmens ein Hubelement zwischengeschaltet ist, über das die Ladebrücke gegenüber den Radsätzen bzw. dem Doppelachslaufwerk bzw. mit dem Drehgestellrahmen gegenüber dessen Radsätzen anhebbar ist.

Hierbei besteht das Hubelement aus einem am Federbock gelenkig gelagerten und durch einen Antrieb beaufschlagbaren Hebel. Der Antrieb kann in Weiterbildung der Erfindung aus einem hydraulischen oder pneumatischen Arbeitszylinder, einem Elektromotor oder einem mechanischen Getriebe bestehen. In Weiterbildung der Erfindung ist der Hebel als Winkelhebel ausgebildet, der mit einem mittleren Drehlager gelenkig an dem Federbock gelagert, an einem freien Ende gelenkig mit der Federschake und an dem anderen freien Ende gelenkig mit dem Antrieb verbunden ist. Durch die Erfindung wird ermöglicht, Eisenbahngüterwagen der eingangs genannten Art, deren Laufwerk aus Einzelachsen, aus Doppelachslaufwerken oder aus Drehgestellen besteht, wirtschaftlich so zu gestalten, daß die Aufnahme von insbesondere Wechselbehältern ohne fremde Beladegeräte ermöglicht wird. Es ist gemäß der Erfindung auch nicht erforderlich, zum Be- und Entladen des Eisenbahngüterwagens Verspannungen oder Führungen zwischen der Ladeplattform und einem Laufwerk zu lösen.

Zweckmäßigerweise ist in Weiterbildung der Erfindung der Hebel als Doppelhebel ausgebildet und je ein Teil des Doppelhebels auf je einer Seite des Federbocks gelagert. Hierbei sind die Federschaken an dem Hebel über einen Schakenbolzen gelagert, wobei der Schakenbolzen bei abgesenkter Ladeplattform mit seiner Mantelfläche stirnseitig gegen den Federbock anliegt.

Der Schakenbolzen weist in Weiterbildung der Erfindung mit Abstand von seinen Längsenden mindestens einen Queranschlag auf, der bei abgesenkter Ladeplattform horizontal in Fahrzeugquerrichtung formschlüssig dem Federbock verbunden ist. Durch diese Ausbildung des Hebels und des Schakenbolzens und deren Anordnung an dem Federbock werden Horizontalkräfte von dem Hebel ferngehalten. Das Absetzen der Last von der Feder über die Federschaken auf den Federbock erfolgt in gleicher Form auf sichere Weise wie bei direkt an dem Federbock gelagerten Federschaken.

Insgesamt wird durch die Erfindung eine einfache und wirtschaftliche Möglichkeit gefunden, die gesamte Ladeplattform des Eisenbahngüterwagens gegenüber seinen Laufwerken, unabhängig von der Art der Laufwerke anzuheben bzw. abzusenken und damit eine Möglichkeit geschaffen, auf einfache Weise insbesondere Wechselbehälter aufzunehmen bzw. abzusetzen.

Einzelheiten der Erfindung sind an Hand der Zeichnung in einem Ausführungsbeispiel erläutert.

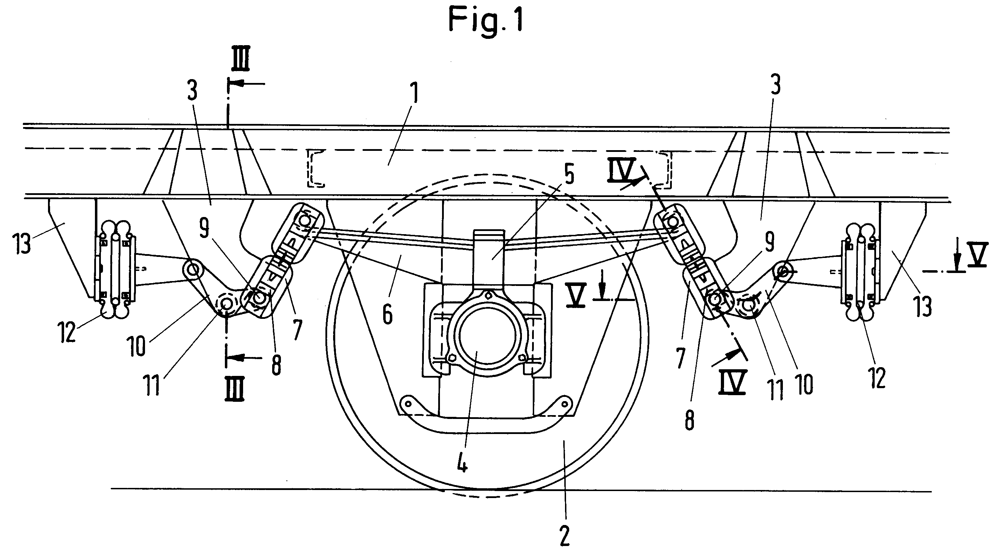

Es zeigen
- Fig 1: Die Seitenansicht eines Teils eines Eisenbahngüterwagens mit einem Teil der Ladeplattform und mit aus Einzelachsen bestehenden Laufwerk gemäß der Erfindung

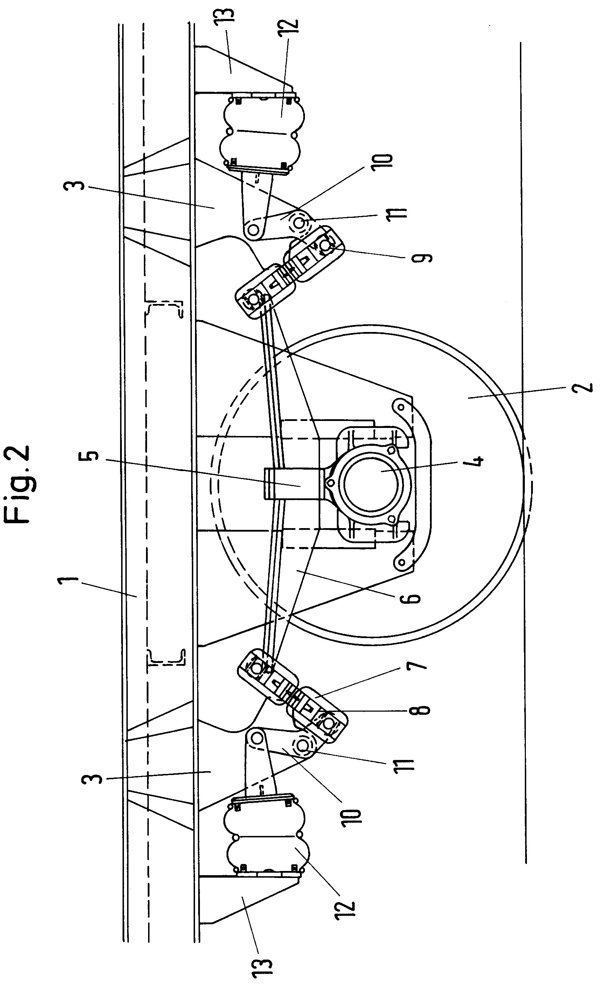

- Fig 2: Den Eisenbahngüterwagen nach Fig 1 mit angehobener Ladeplattform

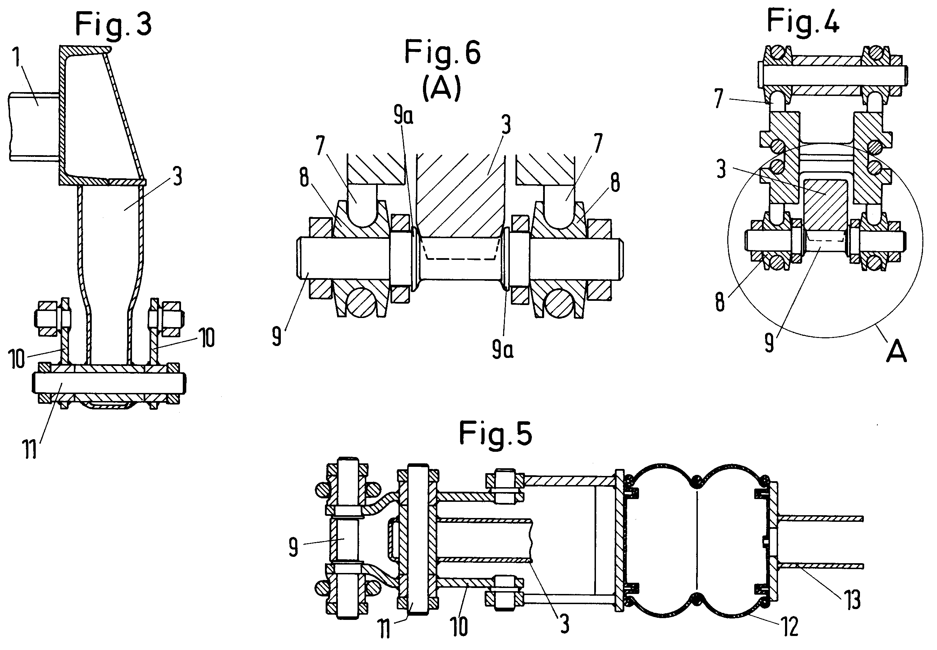

- Fig 3: Den Schnitt nach Linie III/III der Fig 1
- Fig 4: Den Schnitt nach Linie IV/IV der Fig 1
- Fig. 5: Den Schnitt nach Linie V/V der Fig. 1
- Fig. 6: Die Einzelheit A der Fig. 4 in vergrößerter Darstellung
- Fig. 7: Einen Eisenbahngüterwagen entsprechend Fig. 1 jedoch mit Doppelachslaufwerk

Die Erfindung ist in der Zeichnung an dem Ausführungsbeispiel eines zweiachsigen Eisenbahngüterwagens erläutert. Der Eisenbahngüterwagen besteht dabei im wesentlichen aus der ebenen Ladeplattform (1) und den aus einzelnen Radsätzen (2) bestehenden Laufwerken. Vor und hinter jedes Rad jeden Radsatzes (2) ist an der Ladeplattform je ein nach unten weisender Federbock (3) fest angeordnet. Jedes Rad eines jeden Radsatzes (2) trägt auf seinem Achslagergehäuse (4) über einen mittigen Federbund (5) eine Blatttragfeder (6). An den Enden der Blatttragfeder (6) ist diese über übliche Schakengehänge (7) aufgehängt. Die Schakengehänge (7) wiederum lagern über übliche Schakensteine (8) auf Schakenbolzen (9), die ihrerseits an einem freien Ende eines Winkelhebels (10) gelenkig gelagert sind. Der Winkelhebel (10 ) ist mit einem mittleren Drehlager (11) vertikal verschwenkbar an dem Federbock (3) angelenkt. Mit seinem zweiten freien Ende ist der Winkelhebel (10) gelenkig mit einem Antrieb (12) verbunden, der in dem dargestellten Ausführungsbeispiel als Pneumatikzylinder ausgebildet ist. Der Antrieb (12) ist in dem dargestellten Ausführungsbeispiel horizontal in Fahrzeuglängsrichtung wirkend an einem Konsol (13= der Ladeplattform (1) fest angeordnet.

Gemäß anderen, nicht dargestellten Ausführungsbeispielen der Erfindung kann der Antrieb (12) als Hydraulikzylinder, Elektromotor oder als mechanisch wirkendes Getriebe ausgebildet sein.

Jeder Winkelhebel (10) ist als Doppelhebel ausgebildet, und mit einer Seite seitlich an dem Federbock (3) in dem Drehlager (11) gelagert. Der die Schake (7) aufnehmende Schakenbolzen (9) weist beidseitig seiner Längsmitte je einen Bund (9a) auf. Bei abgesenkter Ladeplattform (1) liegt der Schakenbolzen (9) zwischen den Bunden (9a) mit seiner Mantelfläche stirnseitig gegen den Federbock (3) an. Durch diese Anlage des Schakenbolzens (9) an dem Federbock (3) wird bei abgesenkter Ladeplattform (1), d. h. in Fahrstellung des Eisenbahngüterwagens der Antrieb (12) und der Winkelhebel (10) von Kräften freigehalten. Durch die seitliche Anlage der Bunde (9a) des Schakenbolzen (9) an dem Federbock (3) werden zudem horizontale Querkräfte von dem Winkelhebel (10) ferngehalten. Die Ausbildung des Schakenbolzens (9) im dargestellten Ausführungsbeispiel ist nur exemplarisch. Es kann auch jede andere, in Querrichtung wirkende formschlüssige Ausgestaltung des Schakenbolzens (9) und die entsprechende Ausbildung des Federbocks (3) gewählt werden.

Zum Anheben der Ladeplattform (1) wird lediglich jeder Antrieb (12) aktiviert und über die als Festpunkt wirkenden Schaken (7) und Winkelhebel (10) die Ladeplattform (1) angehoben. Das Absenken der Ladeplattform (1) geschieht in umgekehrter Reihenfolge.

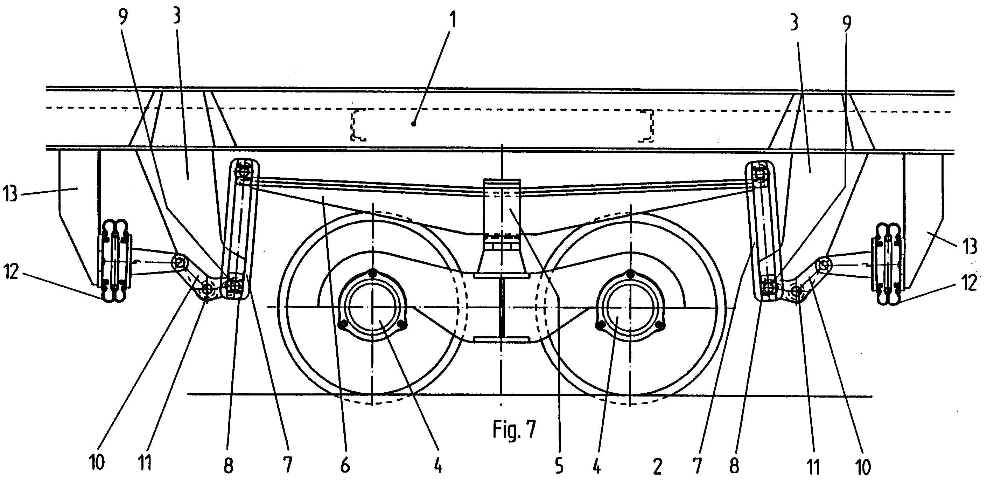

Das dargestellte Ausführungsbeispiel der Erfindung ist identisch bei Eisenbahngüterwagen mit zwei einzelnen Radsätzen und bei Eisenbahngüterwagen mit zwei Doppelachslaufwerken anwendbar, wie z. B in Fig. 7 dargestellt. Dabei stützt sich der Federbund (5) statt am Achslagergehäuse (4) an einer die Achslagergehäuse (4) des Doppelachslaufwerks verbindenden Traverse ab. Bei Eisenbahngüterwagen mit Drehgestellen sind zwischen Winkelhebel (10) und Antrieb (12) lediglich für die Erfindung unwesentlich Umlenkelemente im Drehgestellrahmen zwischengeschaltet.

## Patentansprüche

1. Eisenbahngüterwagen, bestehend aus einer Ladeplattform und zwei Radsätzen, zwei Doppelachslaufwerken oder zwei Drehgestellen, wobei die Abfederung der Ladeplattform gegenüber den Radsätzen oder den Doppelachslaufwerken oder der Ladeplattform mit den Drehgestellrahmen gegenüber den Radsätzen der Drehgestelle über an Federböcken mit Schaken aufgehängten Blatttragfedern erfolgt und wobei die Führung der Radsätze oder der Doppelachslaufwerke unter der Ladeplattform oder die Führung der Radsätze in den Drehgestellrahmen eine vertikale Verschiebung und begrenzt horizontale Ausdrehung der Radsätze gegenüber der Ladeplattform bzw. dem Drehgestellrahmen oder des Doppelachslaufwerks gegenüber der Ladeplattform ermöglicht, dadurch gekennzeichnet, daß zwischen jeder Federschake (7) und dem dazugehörenden Federbock (3) der Ladeplattform (1) oder des Drehgestellrahmens ein Hubelement (10, 12) zwischengeschaltet ist, über das die Ladebrücke (1) gegenüber den Radsätzen beziehungsweise dem Doppelachslaufwerk bzw. mit dem Drehgestellrahmen gegenüber dessen Radsätzen anhebbar ist.

2. Eisenbahngüterwagen nach Anspruch 1, dadurch gekennzeichnet, daß das Hubelement (10, 12) aus einem am Federbock (3) gelenkig gelagerten und durch einen Antrieb (12) beaufschlagbaren Hebel (10) besteht.

3. Eisenbahngüterwagen nach dem Anspruch 2, dadurch gekennzeichnet, daß der Antrieb (12) aus einem hydraulischen oder pneumatischen Arbeitszylinder, einem Elektromotor oder einem mechanischen Getriebe besteht.

4. Eisenbahngüterwagen nach den Ansprüchen 2 bis 3, dadurch gekennzeichnet, daß der Hebel (10) als Winkelhebel ausgebildet ist, mit einem mittleren Drehlager (11) gelenkig an dem Federbock (3) gelagert, an einem freien Ende gelenkig mit der Federschake (7) und an dem anderen freien Ende gelenkig mit dem Antrieb (12) verbunden ist.

5. Eisenbahngüterwagen nach den Ansprüchen 2 bis 4, dadurch gekennzeichnet, daß der Hebel (10) als Doppelhebel ausgebildet und je ein Teil des Doppelhebels auf je einer Seite des Federbocks (3) gelagert ist.

6. Eisenbahngüterwagen nach den Ansprüchen 2 bis 5, dadurch gekennzeichnet, daß die Federschaken (7) an dem Hebel (10) über einen Schakenbolzen (9) gelagert sind, wobei der Schakenbolzen (9) bei abgesenkter Ladeplattform (1) mit seiner Mantelfläche stirnseitig gegen den Federbock (3) anliegt.

7. Eisenbahngüterwagen nach dem Anspruch 6, dadurch gekennzeichnet, der der Schakenbolzen (9) mit Abstand von seinen Längsenden mindestens einen Querumschlag (9a) aufweist, der bei abgesenkter Ladeplattform (1) horizontal in Fahrzeugquerrichtung formschlüssig mit dem Federbock (3) verbunden ist.

8. Eisenbahngüterwagen nach den Ansprüchen 6 bis 7, dadurch gekennzeichnet, daß der Schakenbolzen (9) zwei mit Abstand zueinander angeordnete Queranschläge (9a) aufweist, die bei abgesenkter Ladeplattform (1) von je einer Seite gegen den Federbock (3) anliegen.

## Claims

1. Railway goods wagon, comprising a loading platform and two wheelsets, two double-axle running gears or two bogies, the loading platform being cushioned against the wheelsets or the double-axle running gears or the loading platform with the bogie frame being cushioned against the wheelsets of the bogies by means of leaf suspension springs suspended by links from spring brackets and the guidance of the wheelsets or of the double-axle running gears below the loading platform or the guidance of the wheelsets into the bogie frame allowing a vertical displacement and limitedly horizontal out-turn of the wheelsets relative to the loading platform or to the bogie frame respectively or of the double-axle running gear relative to the loading platform, characterized in that between each suspension ring (7) and the associated spring bracket (3) of the loading platform (1) or bogie frame there is interposed a lifting element (10, 12) by means of which the loading bridge (1) can be raised relative to the wheelsets or to the double-axle running gear respectively or, with the bogie frame, relative to its wheelsets.

2. Railway goods wagon according to Claim 1, characterized in that the lifting element (10, 12) comprises a lever (10) which is hinge-mounted on the spring bracket (3) and can be actuated by a drive mechanism (12).

3. Railway goods wagon according to Claim 2, characterized in that the drive mechanism (12) comprises a hydraulic or pneumatic working cylinder, an electric motor or a mechanical gear system.

4. Railway goods wagon according to Claims 2 to 3, characterized in that the lever (10) is configured as an angular lever [lacuna], hinge-mounted by a central pivot bearing (11) on the spring bracket (3), is connected at one free end in an articulated manner to the suspension ring (7) and at the other free end in an articulated manner to the drive mechanism (12).

5. Railway goods wagon according to Claims 2 to 4, characterized in that the lever (10) is configured as a double lever and each respective part of the double lever is mounted on a respective side of the spring bracket (3).

6. Railway goods wagon according to Claims 2 to 5, characterized in that the suspension rings (7) are mounted on the lever (10) by means of a link bolt (9), the link bolt (9), when the loading platform (1) is lowered, bearing with its contacting surface frontally against the spring bracket (3).

7. Railway goods wagon according to Claim 6, characterized in that the link bolt (9) exhibits, at a distance from its longitudinal ends, at least one transverse cover [sic] (9a), which, when the loading platform (1) is lowered, is connected, horizontally in the transverse direction of the vehicle, positively to the spring bracket (3).

8. Railway goods wagon according to Claims 6 to 7, characterized in that the link bolt (9) exhibits two spaced apart transverse stops (9a), which, when the loading platform (1) is lowered, bear from one side each against the spring bracket (3).

## Revendications

1. Wagon à marchandises comprenant une plateforme de chargement et deux essieux, deux trains de roulement à essieux doubles ou deux bogies, la suspension de la plateforme par rapport aux essieux ou aux trains de roulement à essieux doubles, ou de la plateforme de chargement et du châssis de bogie par rapport aux essieux des bogies étant réalisée par des ressorts à lames qui sont reliés par des anneaux de suspension à des supports de suspension et le guidage des essieux ou des trains de roulement à essieux doubles sous la plateforme de chargement ou le guidage des essieux dans le châssis de bogie permettant un débattement vertical et un pivotement horizontal limité des essieux par rapport à la plateforme de chargement ou au châssis de bogie, ou du train de roulement à essieux doubles par rapport à la plateforme de chargement, caractérisé par le fait qu'un organe de réglage (10,12) est disposé entre chaque anneau de suspension (7) et le support (3) de suspension concerné de la plateforme de chargement (1) ou du châssis de bogie, organe au moyen duquel la plateforme de chargement (1) peut être soulevée par rapport aux essieux ou au train de roulement à essieux doubles, ou avec le châssis de bogie par rapport aux essieux de celui-ci.

2. Wagon à marchandises selon la revendication 1, caractérisé par le fait que l'organe de réglage (10, 12) est constitué d'un levier (10) qui est articulé sur le support (3) de suspension et est sollicité par un moyen d'entraînement (12).

3. Wagon à marchandises selon la revendication 2, caractérisé par le fait que le moyen d'entraînement (12) est un vérin hydraulique ou pneumatique, un moteur électrique ou une transmission mécanique.

4. Wagon à marchandises selon les revendications 2 à 3, caractérisé par le fait que le levier (10) est conformé en levier coudé, est articulé sur le support (3) de suspension par un palier (11) médian et est relié de manière articulée par l'une de ses extrémités libres à l'anneau (7) de suspension et par son autre extrémité libre au moyen d'entraînement (12).

5. Wagon à marchandises selon les revendications 2 à 4, caractérisé par le fait que le levier (10) est conformé en levier double et qu'une partie du levier double est montée respectivement de chaque côté du support (3) de suspension.

6. Wagon à marchandises selon les revendications 2 à 5, caractérisé par le fait que les anneaux (7) de suspension sont reliés aux leviers (10) par un axe (9) d'anneau de suspension, l'axe (9) d'anneau de suspension venant en appui par sa surface extérieure contre la face du support (3) de suspension lorsque la plateforme de chargement (1) est en position basse.

7. Wagon à marchandises selon la revendication 6, caractérisé par le fait que l'axe (9) d'anneau de suspension présente, à distance de ses extrémités longitudinales, au moins un bourrelet (9a) transversal qui, lorsque la plateforme de chargement (1) est en position basse, est lié horizontalement, dans la direction transversale du véhicule, par complémentarité de forme au support (3) de suspension.

8. Wagon à marchandises selon les revendications 6 à 7, caractérisé par le fait que l'axe (9) d'anneau de suspension présente deux butées (9a) transversales espacées l'une de l'autre qui, lorsque la plateforme de chargement (1) est en position basse, viennent en appui de chaque côté sur le support (3) de suspension.
